# EUROPEAN PATENT APPLICATION

(11) **EP 3 576 253 A1**
(43) Date of publication of application: **04.12.2019**
(21) Application number: 17894482.3
(22) Date of filing: 30.01.2017
(51) Int. Cl.: H02K 1/27

(54) **AXIAL GAP TYPE ROTATING ELECTRIC MACHINE**

(71) Applicant: Hitachi Industrial Equipment Systems Co., Ltd., Tokyo 101-0022 (JP)
(72) Inventor: TAKAHASHI, Daisaku, Tokyo 101-0022 (JP); SAKURAI, Jun, Tokyo 101-0022 (JP); SAKAI, Toru, Tokyo 101-0022 (JP); TAKAHASHI, Shuuichi, Tokyo 101-0022 (JP); YONEOKA, Yasuei, Tokyo 101-0022 (JP)
(74) Representative: MERH-IP Matias Erny Reichl Hoffmann Patentanwälte PartG mbB
(86) International application number: PCT/JP2017/003195
(87) International publication number: WO 2018/138914

(57) **Abstract**

Provided is an axial gap type rotating electric machine in which the distance between the stator-facing surface of a permanent magnet constituting a rotor and a stator can be uniformed even if distortion and unevenness caused by a processing error are present in a rotor base, the permanent magnet, and the like. The axial gap type rotating electric machine is provided with a stator and at least one rotor facing the stator with a predetermined air gap interposed therebetween in the rotating shaft direction and is characterized in that: the rotor is provided with a rotor base, a magnet attached to the rotor base, and a connection member for connecting the magnet to the rotor base; the surface of the magnet facing the stator is vertical to the rotational axis line of the rotor; and the thickness of the connection member in the rotating shaft direction varies on the magnet-attached surface of the rotor base so that the surface of the magnet facing the stator becomes vertical to the rotational axis line of the rotor.

## Description

### TECHNICAL FIELD

The present invention relates to an axial gap type rotating electric machine.

### BACKGROUND ART

An axial gap type rotating electric machine has a configuration in which a cylindrical stator is disposed to face a disk-shaped rotor with a predetermined air gap interposed therebetween in a rotating shaft direction. The stator is configured to have a plurality of cores disposed in an inner circumferential direction of a housing and coils wound around the cores. In addition, the rotor is configured to have a permanent magnet provided with magnetic poles disposed alternately in a circumferential direction and a rotor base that supports the permanent magnet.

Torque of an electric motor (motor) is proportional to a gap area, which is a facing surface of the rotor and the stator. Therefore, with an axial gap type motor, it is possible to increase a gap area as the rotor increases in diameter, and thus it is possible to achieve a high output and high efficiency of the motor. Hence, the axial gap type motor is more suitable for a thin flattened motor, compared with a commonly-used radial gap type motor in which a cylindrical stator faces a cylindrical rotor in a radial direction.

In Patent Document 1, an axial gap type rotating electric machine is described, in which, in order to easily spread an adhesive, which is interposed in a gap between an adhesive surface of a magnet and an adhesive surface of a yoke, "there is provided a rotor including the magnet disposed to face a stator and a rotor-side yoke provided with an adhesive surface to which an adherend surface of the magnet adheres and is fixed with an adhesive member interposed therebetween, in which the rotor-side yoke has a configuration in which the gap, in which the adhesive member is interposed between the adherend surface and the adhesive surface, is formed into a tapered shape toward one end portion side of the adhesive surface (refer to Abstract)".

### CITATION LIST

### PATENT DOCUMENT

Patent Document 1: JP 2004-80898 A

### SUMMARY OF THE INVENTION

### PROBLEMS TO BE SOLVED BY THE INVENTION

However, in the axial gap type rotating electric machine described in Patent Document 1, in order to achieve more strong adhesiveness between the magnet and the yoke, the yoke is symmetrically formed to be inclined with respect to a rotational axis line. The shape of the yoke is formed for spreading the adhesive but is not formed by considering a problem such as a processing error or the like of the yoke.

When an axial gap type rotating electric machine is actually manufactured, it is necessary to uniform a distance between a stator-facing surface of a permanent magnet constituting a rotor and a stator, in order to improve performance, to prevent irregular rotation, or the like. Therefore, the stator-facing surface of the permanent magnet needs to be vertical to a rotational axis line of a rotating shaft. In the rotor, the permanent magnet is pressed to a rotor base so as to be attached with an adhesive or the like; however, it is not possible to necessarily obtain uniform surfaces of the rotor base and the permanent magnet due to a processing error or the like, and thus distortion or unevenness is likely to be caused in the surface thereof. When such a component is used, it is difficult to configure a uniform distance between the stator and the component. In addition, when processing accuracy of the rotor base or the like enhances, a processing time is prolonged, and thus a problem arises in productivity or cost.

As described above, it is desirable to provide an axial gap type rotating electric machine in which a distance between a stator-facing surface of a permanent magnet constituting a rotor and a stator can be uniformed even if distortion and unevenness caused by a processing error are present in a rotor base, the permanent magnet, and the like.

### SOLUTIONS TO PROBLEMS

In order to solve the problem described above, configurations described in CLAIMS are adopted.

The invention includes a plurality of means for solving the problem described above; however, as an example of an axial gap type rotating electric machine of the invention, There is provided an axial gap type rotating electric machine including: a stator; and at least one rotor facing the stator with a predetermined air gap interposed therebetween in a rotating shaft direction. The rotor is provided with a rotor base, a magnet attached to the rotor base, and a connection member for connecting the magnet to the rotor base, a surface of the magnet facing the stator is vertical to a rotational axis line of the rotor, and a thickness of the connection member in the rotating shaft direction varies on a magnet-attached surface of the rotor base so that the surface of the magnet facing the stator becomes vertical to the rotational axis line of the rotor.

### EFFECTS OF THE INVENTION

According to the invention, a distance between a stator-facing surface of a permanent magnet constituting a rotor and a stator can be uniformed even if a processing error is present in a rotor base, the permanent magnet, and the like. In addition, there is no need to enhance processing accuracy of the rotor base, the permanent magnet, and the like, and thus it is possible to improve productivity and reduce manufacturing costs.

Problems, configurations, and effects other than the problems, configurations, and effects described above are clarified in the following description of embodiments.

### BRIEF DESCRIPTION OF THE DRAWINGS

Fig. 1 is a schematic cross-sectional view illustrating an example of an axial gap type rotating electric machine.
Fig. 2A is a cross-sectional view of a rotor in a rotating shaft direction of the axial gap type rotating electric machine according to an example to which the invention is applied.
Fig. 2B is a cross-sectional view of a modification example of the rotor in the rotating shaft direction of the axial gap type rotating electric machine illustrated in Fig. 2A.
Fig. 3 is another cross-sectional view of the rotor in the rotating shaft direction of the axial gap type rotating electric machine according to the example to which the invention is applied.
Fig. 4 is still another cross-sectional view of the rotor in the rotating shaft direction of the axial gap type rotating electric machine according to the example to which the invention is applied.
Fig. 5 is still another cross-sectional view of the rotor in the rotating shaft direction of the axial gap type rotating electric machine according to the example to which the invention is applied.
Fig. 6 is still another cross-sectional view of the rotor in the rotating shaft direction of the axial gap type rotating electric machine according to the example to which the invention is applied.
Fig. 7 is still another cross-sectional view of the rotor in the rotating shaft direction of the axial gap type rotating electric machine according to the example to which the invention is applied.
Fig. 8 is still another cross-sectional view of the rotor in the rotating shaft direction of the axial gap type rotating electric machine according to the example to which the invention is applied.

### MODE FOR CARRYING OUT THE INVENTION

Hereinafter, embodiments of the invention will be described with reference to the drawings. The following description is provided for a specific example of content of the invention, and thus the invention is not limited to the description. In addition, it is possible for those skilled in the art to perform various modifications and alterations within a range of the technical idea that is disclosed in the present specification. In addition, the same reference signs are assigned to components having the same functions in all of the drawings for describing the invention, and thus the repeated description thereof is omitted.

### EXAMPLES

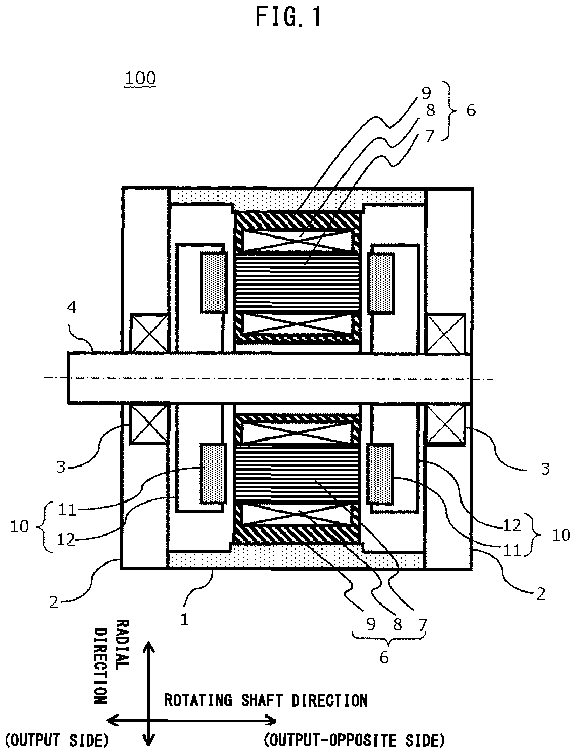

Fig. 1 is a schematic cross-sectional view of an example of a double-rotor axial gap type motor to which the invention is applied.

A motor 100 has a configuration in which a cylindrical stator 6 disposed along an inner circumferential surface of a housing 1 is disposed to face surfaces of two disk-shaped rotors 10 with predetermined air gaps interposed therebetween in a rotating shaft direction. The rotor 10 is fixed to a rotating shaft 4 at the center of the disk. The rotating shaft 4 is disposed to penetrate a central part of the cylindrical stator 6 and has both end portions that are each rotatably fixed to a bracket 2 via a bearing 3. The bracket 2 is fixed to the substantially cylindrical housing 1 in the vicinity of both opening end portions.

The stator 6 has a configuration in which a plurality of stator cores 7 are disposed around the rotating shaft 4 at equal intervals in a circumferential direction. Each of the stator cores 7 is provided with a bobbin (not illustrated) around which a stator coil 8 is wound, and the stator core 7 and the stator coil 8 are molded by a mold resin 9.

The rotor 10 is configured to have a disk-shaped rotor base (a base or a base portion) 12 and a permanent magnet 11. The permanent magnet 11 may by one annular magnet or may be divided into a plurality of magnets. The permanent magnet 11 is magnetized in the rotating shaft direction such that N poles and S poles are alternately positioned in a circumferential direction. The rotor base 12 may be a nonmagnetic body or may be a yoke made of a magnetic body. In addition, the yoke made of the magnetic body may be disposed between the rotor base 12 of the nonmagnetic body and the permanent magnet 11. For example, the permanent magnet 11 is made of a rare-earth magnet, a ferrite magnet, or the like. The permanent magnet 11 is attached to the rotor base 12 with a connection member (not illustrated) such as an adhesive.

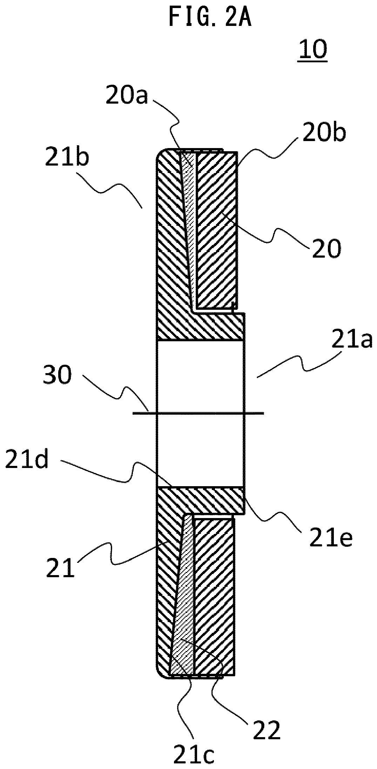

Fig. 2A illustrates an example of an enlarged cross-sectional view of the rotor 10 of the example. A permanent magnet 20 is formed by an annular flat magnet having a uniform thickness and is provided with a rotor base-connected surface 20a and a stator-facing surface 20b. A rotor base 21 is provided with a rotating shaft portion 21a at the center thereof and a magnet support 21b on an outer circumferential side thereof. The rotating shaft 4 is fitted into a center hole of the rotating shaft portion 21a at the time of assembly. The magnet support 21b that supports the permanent magnet 20 is provided with a permanent magnet-connected surface 21c, and the permanent magnet 20 is attached and is held thereon.

Incidentally, a reference sign 21d represents a first shaft-attached reference surface, which is a reference surface to which a shaft is attached as a jig used when the permanent magnet 20 is attached. The first shaft-attached reference surface is a cylindrical surface parallel to a rotational axis line 30, and the rotating shaft is attached thereto below. In addition, a reference sign 21e represents a second shaft-attached reference surface, which is a reference surface to which the shaft is attached as the jig used when the permanent magnet 20 is attached. The second shaft-attached reference surface is a stator-facing surface that is vertical to the rotational axis line 30.

The permanent magnet-connected surface 21c of the rotor base 21 is designed as a flat surface that is vertical to the rotational axis line 30; however, the permanent magnet-connected surface may not be really vertical to the rotational axis line 30 due to a processing error. Fig. 2A illustrates an example in which a thickness of the magnet support 21b decreases on an outer circumferential side of the rotor base 21, and there are also variations in thickness on the center side.

In the axial gap type motor, it is necessary to uniform a distance between the stator-facing surface 20b of the permanent magnet 20 constituting the rotor and the stator, in order to improve performance or to prevent irregular rotation. Therefore, the stator-facing surface 20b of the permanent magnet 20 needs to be vertical to the rotational axis line 30 of the rotating shaft. In the example, a thickness of the connection member 22 such as the adhesive varies depending on the processing error in a radial direction and/or the circumferential direction, and thereby the stator-facing surface 20b of the permanent magnet 20 is vertical to the rotational axis line 30 of the rotating shaft.

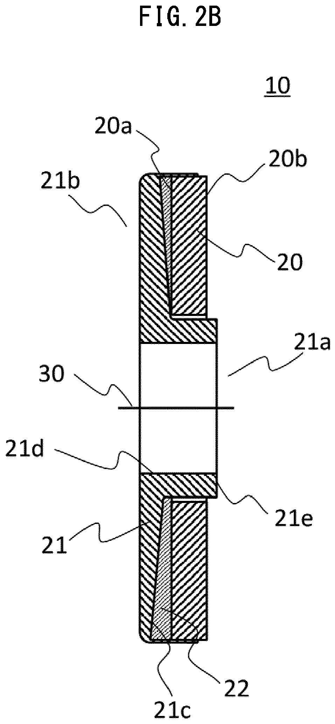

To be more particular, the connection member 22 such as the adhesive is applied on the permanent magnet-connected surface 21c of the magnet support 21b. In this manner, while the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the permanent magnet-connected surface 21c and the rotor base-connected surface 20a are brought into contact with each other in a part thereof on the center side, or a predetermined period of time elapses, pressing of the permanent magnet 20 is stopped, and the connection member 22 hardens in this state such that the connection is performed. Fig. 2A illustrates an example in which pressing of the permanent magnet 20 is stopped when the predetermined period of time elapses, in a state in which the permanent magnet-connected surface 21c and the rotor base-connected surface 20a are not brought into contact with each other. Therefore, the connection member 22 remains between the permanent magnet-connected surface 21c and the rotor base-connected surface 20a. By comparison, Fig. 2B illustrates an example of an enlarged cross-sectional view of the rotor 10, in which the permanent magnet 20 is pressed until the permanent magnet-connected surface 21c and the rotor base-connected surface 20a are brought into contact with each other in a part thereof. In the invention, the permanent magnet-connected surface 21c and the rotor base-connected surface 20a may be brought into contact with each other in a part thereof or may be connected to each other with the connection member 22 such as the adhesive interposed between both surfaces.

In order for the stator-facing surface 20b of the permanent magnet 20 to be maintained to be vertical to the rotational axis line 30, for example, the shaft (not illustrated) as the jig may be attached to the rotor base 21 with a first shaft-attached reference surface 21d parallel to the rotational axis line 30, as a reference, and the permanent magnet 20 may be inserted with the shaft as a guide, or the shaft (not illustrated) as the jig may be attached to the rotor base with a second shaft-attached reference surface 21e vertical to the rotational axis line 30, as a reference, and the permanent magnet 20 may be inserted with the shaft as a guide.

When the permanent magnet 20 continues to be pressed even after the permanent magnet-connected surface 21c of the rotor base and the rotor base-connected surface 20a of the permanent magnet are brought into contact with each other in a part thereof, the permanent magnet 20 is inclined along the permanent magnet-connected surface 21c of the rotor base 21, and the stator-facing surface 20b of the permanent magnet 20 is not vertical to the rotational axis line 30.

In the example, a thickness of the connection member 22 such as the adhesive varies, and thereby it is possible to offset variations in thickness of the rotor base due to the processing error of the rotor base 21, offset the processing error, and cause the stator-facing surface 20b of the permanent magnet 20 to be maintained to be vertical to the rotational axis line 30.

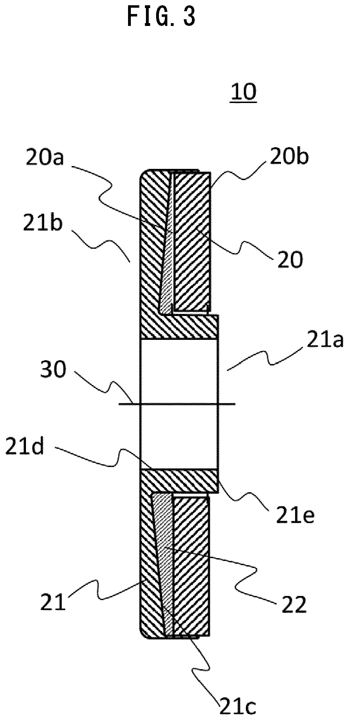

Fig. 3 illustrates another example of the enlarged cross-sectional view of the rotor 10 of the example. Fig. 3 illustrates an example in which the thickness of the magnet support 21b decreases on an inner circumferential side of the rotor base 21, and there are also variations in thickness on the outer circumferential side.

Also in the example, the thickness of the connection member 22 such as the adhesive varies depending on the processing error in the radial direction and/or the circumferential direction, and thereby the stator-facing surface 20b of the permanent magnet 20 is vertical to the rotational axis line 30 of the rotating shaft. To be more particular, while the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the permanent magnet-connected surface 21c and the rotor base-connected surface 20a are brought into contact with each other in a part thereof on the outer circumferential side of the rotor base 21, or the predetermined period of time elapses, pressing of the permanent magnet 20 is stopped, and the connection member 22 hardens in this state such that the connection is performed. Fig. 3 illustrates an example in which the connection member 22 hardens in a state in which the permanent magnet-connected surface 21c and the rotor base-connected surface 20a are not brought into contact with each other.

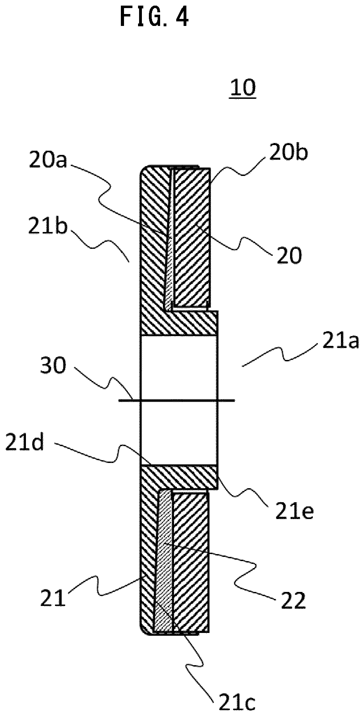

Fig. 4 illustrates still another example of the enlarged cross-sectional view of the rotor 10 of the example. Fig. 4 illustrates an example in which the thickness of the magnet support 21b decreases gradually from one end on the outer circumferential side of the rotor base 21 to the other end on the outer circumferential side thereof.

Also in the example, the thickness of the connection member 22 such as the adhesive varies depending on the processing error in the radial direction and/or the circumferential direction, and thereby the stator-facing surface 20b of the permanent magnet 20 is vertical to the rotational axis line 30 of the rotating shaft. To be more particular, while the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the permanent magnet-connected surface 21c and the rotor base-connected surface 20a are brought into contact with each other in a part thereof at one end of the rotor base 21 on the outer circumferential side, or the predetermined period of time elapses, pressing of the permanent magnet 20 is stopped, and the connection member 22 hardens in this state such that the connection is performed. Fig. 4 illustrates an example in which the connection member 22 hardens in a state in which the permanent magnet-connected surface 21c and the rotor base-connected surface 20a are not brought into contact with each other.

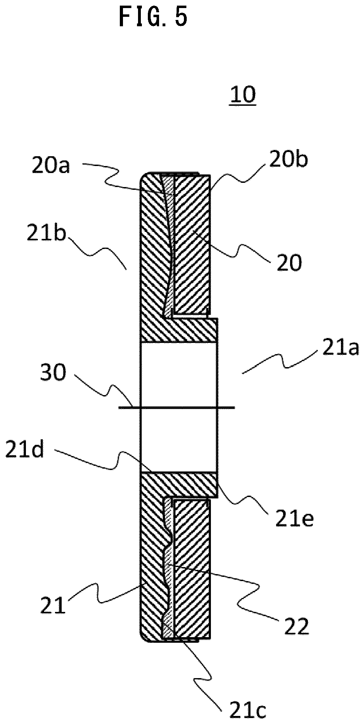

Fig. 5 illustrates still another example of the enlarged cross-sectional view of the rotor 10 of the example. Fig. 5 illustrates an example in which the permanent magnet-connected surface 21c of the rotor base 21 curves and is provided with one or a plurality of uneven portions.

Also in the example, the thickness of the connection member 22 such as the adhesive varies depending on the processing error, and thereby the stator-facing surface 20b of the permanent magnet 20 is vertical to the rotational axis line 30 of the rotating shaft. To be more particular, while the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the permanent magnet-connected surface 21c and the rotor base-connected surface 20a are brought into contact with each other in a part thereof at a convex portion in which the rotor base 21 curves, or the predetermined period of time elapses, pressing of the permanent magnet 20 is stopped, and the connection member 22 hardens in this state such that the connection is performed.

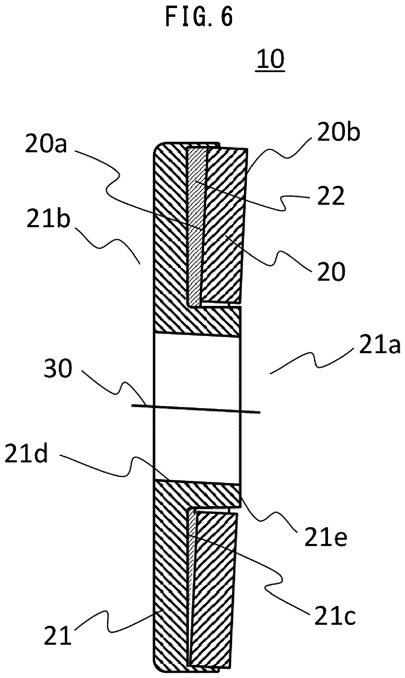

Fig. 6 illustrates still another example of the enlarged cross-sectional view of the rotor 10 of the example. Fig. 6 illustrates an example in which the rotating shaft of the rotor 10 is inclined, that is, an example in which the rotational axis line 30 of a rotating shaft-attaching hole provided at the center rotating shaft portion 21a of the rotor base 21 is inclined due to the processing error.

Also in the example, the thickness of the connection member 22 such as the adhesive varies depending on the processing error in the radial direction and/or the circumferential direction, and thereby the stator-facing surface 20b of the permanent magnet 20 is vertical to the rotational axis line 30 of the rotating shaft. To be more particular, while the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the permanent magnet-connected surface 21c and the rotor base-connected surface 20a are brought into contact with each other in a part thereof at one end of the rotor base 21, or the predetermined period of time elapses, pressing of the permanent magnet 20 is stopped, and the connection member 22 hardens in this state such that the connection is performed. Fig. 6 illustrates an example in which the connection member 22 hardens in a state in which the permanent magnet-connected surface 21c and the rotor base-connected surface 20a are not brought into contact with each other.

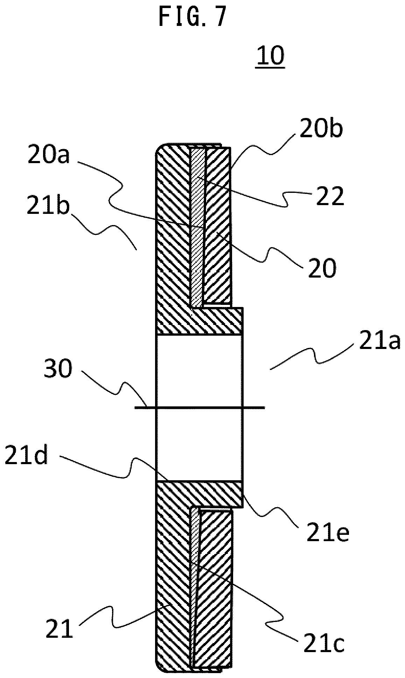

Fig. 7 illustrates still another example of the enlarged cross-sectional view of the rotor 10 of the example. Fig. 7 illustrates an example in which the thickness of the permanent magnet 20 is non-uniform, and the thickness varies gradually from one end toward the other end thereof.

Also in the example, the thickness of the connection member 22 such as the adhesive varies depending on the processing error in the radial direction and/or the circumferential direction, and thereby the stator-facing surface 20b of the permanent magnet 20 is vertical to the rotational axis line 30 of the rotating shaft. To be more particular, while the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the permanent magnet-connected surface 21c and the rotor base-connected surface 20a are brought into contact with each other in a part thereof at one end of the permanent magnet 20, or the predetermined period of time elapses, pressing of the permanent magnet 20 is stopped, and the connection member 22 hardens in this state such that the connection is performed. Fig. 7 illustrates an example in which the connection member 22 hardens in a state in which the permanent magnet-connected surface 21c and the rotor base-connected surface 20a are not brought into contact with each other.

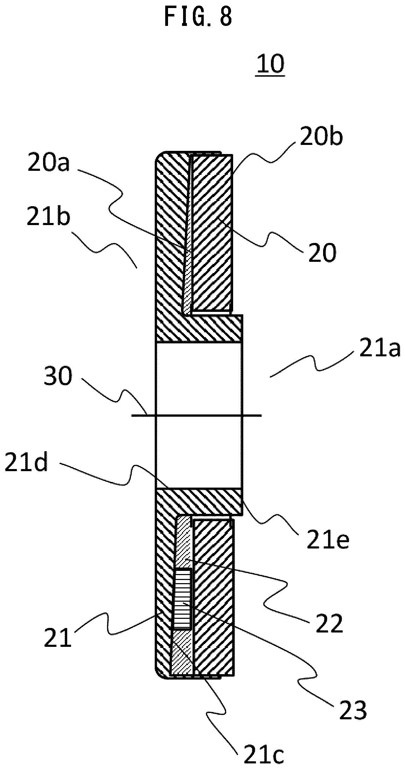

Fig. 8 illustrates still another example of the enlarged cross-sectional view of the rotor 10 of the example. Fig. 8 illustrates an example in which a distance adjusting member 23 enters a space formed by the distance between the permanent magnet-connected surface 21c and the rotor base-connected surface 20a.

Also in the example, the thickness of the connection member 22 such as the adhesive varies depending on the processing error in the radial direction and/or the circumferential direction, and thereby the stator-facing surface 20b of the permanent magnet 20 is vertical to the rotational axis line 30 of the rotating shaft. To be more particular, the distance adjusting member 23 is disposed on the permanent magnet-connected surface 21c of the magnet support 21b, and the connection member 22 such as the adhesive is applied thereon. While the stator-facing surface 20b of the permanent magnet 20 is maintained to be vertical to the rotational axis line 30, the permanent magnet 20 is pressed in parallel with the rotational axis line 30 toward the rotor base 21. When the connection member 22 such as the adhesive is pressed, the connection member 22 flows so as to shorten the distance between the permanent magnet-connected surface 21c and the rotor base-connected surface 20a. In this manner, when the distance adjusting member 23 and the rotor base-connected surface 20a are brought into contact with each other in a part thereof at any position of the distance adjusting member 23, or the predetermined period of time elapses, pressing of the permanent magnet 20 is stopped, and the connection member 22 hardens in this state such that the connection is performed. Fig. 8 illustrates an example in which the connection member 22 hardens in a state in which the distance adjusting member 23 and the rotor base-connected surface 20a are not brought into contact with each other.

In the example, it is possible to cause the stator-facing surface 20b of the permanent magnet 20 to be vertical to the rotational axis line 30 of the rotating shaft, and it is possible to adjust the distance between the permanent magnet-connected surface 21c and the rotor base-connected surface 20a by the distance adjusting member 23.

As described above, according to the example, the thickness of the connection member 22 such as the adhesive varies, and thereby it is possible to offset variations or the like in thickness of the rotor base or the permanent magnet due to the processing error of the rotor base 21 or the permanent magnet 20, offset the processing error, cause the stator-facing surface 20b of the permanent magnet 20 to be maintained to be vertical to the rotational axis line 30, and uniform the distance between the stator and the stator-facing surface of the permanent magnet constituting the rotor. In this manner, there is no need to enhance processing accuracy of the rotor base, the permanent magnet, and the like, and thus it is possible to improve productivity and reduce manufacturing costs.

Incidentally, in the example, an example of the double-rotor type motor is described; however, the invention can be applied to an axial gap type motor having another structure such as a single-rotor type motor. Further, the invention may be applied to an electric motor or a generator.

### REFERENCE SIGNS LIST

- 1: Housing
- 2: Bracket
- 3: Bearing
- 4: Rotating shaft
- 6: Stator
- 7: Stator core
- 8: Stator coil
- 9: Mold resin
- 10: Rotor
- 11: Permanent magnet
- 12: Rotor base
- 20: Permanent magnet
- 20a: Rotor base-connected surface
- 20b: Stator-facing surface
- 21: Rotor base
- 21a: Rotating shaft portion
- 21b: Magnet support
- 21c: Permanent magnet-connected surface
- 21d: First shaft-attached reference surface
- 21e: Second shaft-attached reference surface
- 22: Connection member
- 23: Distance adjusting member
- 30: Rotational axis line
- 100: Motor

## Claims

1. An axial gap type rotating electric machine comprising:
a stator; and
at least one rotor facing the stator with a predetermined air gap interposed therebetween in a rotating shaft direction,
wherein the rotor is provided with a rotor base, a magnet attached to the rotor base, and a connection member for connecting the magnet to the rotor base,
wherein a surface of the magnet facing the stator is vertical to a rotational axis line of the rotor, and
wherein a thickness of the connection member in the rotating shaft direction varies on a magnet-attached surface of the rotor base so that the surface of the magnet facing the stator becomes vertical to the rotational axis line of the rotor.

2. The axial gap type rotating electric machine according to claim 1,
wherein the connection member is an adhesive.

3. The axial gap type rotating electric machine according to claim 1,
wherein the magnet-attached surface of the rotor base becomes substantially vertical to the rotational axis line of the rotor.

4. The axial gap type rotating electric machine according to claim 1,
wherein the thickness of the connection member in the rotating shaft direction varies on the magnet-attached surface of the rotor base so as to absorb a processing error of the magnet-attached surface of the rotor base or a front surface of the magnet.

5. The axial gap type rotating electric machine according to claim 1,
wherein verticality of the surface of the magnet facing the stator to the rotational axis line of the rotor is defined with a first shaft-attached reference surface, which is a rotating shaft-attached surface of a rotating shaft portion of the rotor base, as a reference.

6. The axial gap type rotating electric machine according to claim 1,
wherein verticality of the surface of the magnet facing the stator to the rotational axis line of the rotor is defined with a second shaft-attached reference surface, which is a stator-facing surface of a rotating shaft portion of the rotor base, as a reference.

7. The axial gap type rotating electric machine according to claim 1,
wherein the magnet is an annular flat magnet.

8. The axial gap type rotating electric machine according to claim 1,
wherein the magnet is divided flat magnets.

9. The axial gap type rotating electric machine according to claim 1,
wherein, between the magnet-attached surface and a rotor base-connected surface of the magnet, a distance adjusting member is disposed.

10. An axial gap type rotating electric machine comprising:
a stator; and
at least one rotor facing the stator with a predetermined air gap interposed therebetween in a rotating shaft direction,
wherein the rotor is provided with a rotor base, a magnet attached to the rotor base, and an adhesive for causing the magnet to adhere to the rotor base,
wherein a surface of the magnet facing the stator is vertical to a rotational axis line of the rotor, and
wherein a thickness of the adhesive in the rotating shaft direction varies on a magnet-attached surface of the rotor base so as to absorb a processing error of the magnet-attached surface of the rotor base, a processing error of a thickness of the magnet, or a processing error of a rotating shaft-attaching hole of the rotor base.
